# EUROPEAN PATENT SPECIFICATION

(11) **EP 0 919 151 B1**
(45) Date of publication and mention of the grant of the patent: **26.02.2003**
(21) Application number: 97120413.6
(22) Date of filing: 21.11.1997
(51) Int. Cl.: A43D 25/20, C09J 7/02

(54) **Method for gluing shoes by using a thermoplastic adhesive film**
Verklebungsverfahren für Schuhe unter Verwendung thermoplastischer Klebschichten
Procédé de collage de chaussures par une feuille thermoplastique adhésive

(43) Date of publication of application: 02.06.1999
(73) Proprietor: C.G.S. di Coluccia Michele & C. s.a.s., 56100 Pisa (IT)
(72) Inventor: Salvadorini, Silverio, 56021 Cascina (Pisa) (IT)
(74) Representative: Bardini, Marco Luigi

(56) References cited:
- EP-A- 0 237 657
- EP-A- 0 381 897
- DE-A- 2 442 083
- US-A- 3 951 919
- US-A- 4 772 650

## Description

The present invention relates to a method for gluing shoe components within the production process of shoes, as well as to a film made of thermoplastic material which may be used for gluing shoe components according to the above method.

As is well-known, consecutive phases of reciprocal joining of the various components, by means of sewing and/or gluing operations, are foreseen during the production process of shoes. The gluing phase, which is carried out by hand, is particularly critical and problematic for reasons regarding production efficiency and also danger towards operators and towards the environment. In fact, during the gluing phase, liquid -adhesives or adhesives dissolved in suitable solvents are widely used. This leads to the continuous introduction into the working environment of toxic and inflammable vapours, that must be continuously removed and abated, and also the stocking of extremely dangerous materials. Furthermore the gluing modalities which are performed (including spreading the adhesive, waiting for the solvent to evaporate, the actual joining of the components, cleaning the product in order to remove traces of the adhesive) make the automation of this phase of the production process of shoes very difficult to implement and this negatively affects production costs.

DE-2442083 discloses a method for bonding a shoe upper to a sole by providing an adhesive film to the sole and hot pressing the upper thereon.

EP 237657 discloses a method to bond carpet strips by means of a composite adhesive tape comprising a hot-melt type adhesive layer containing therein a high frequency inductor powder.

EP 381897 discloses a hot-melt polyurethane adhesive for use in bonding shoe soles to shoe uppers. The operating temperature for melting the adhesive is however 100-150°C.

US 3951919 discloses a polyurethane adhesive film to be disposed between the attaching surface of a shoe upper and edge portions of a mold. When hot molten plastic is injected into the mold the adhesive is molten to form a tread member strongly adherent to the shoe bottom with the aid of the adhesive. The operating temperature are about 180°C depending on the type of plastic used.

The object of the present invention is to provide a method for gluing shoe components which does not involve the use of liquid adhesives or adhesive solutions, thus eliminating problems connected to the presence of toxic or inflammable vapours in the working environment and to the stocking of these adhesive products.

Another aim of the present invention is to supply a gluing method of the above mentioned type which is less toilsome and simpler compared to traditional techniques and which is therefore more suitable for being automated.

In its most general embodiment, the gluing method of shoe components according to the present invention foresees the placing of a film, made of thermoplastic material, between the components to be glued which acts as an adhesive after it has been melted, the film being suitable to melting under heating conditions that do not cause degradation of the materials of which the components are made; the method further foresees that the assembly made up of the components to be joined and thermoplastic film placed between them, be heated under pressure until the film melts, finally leading to a rapid cooling under pressure.

The thermoplastic film may be obtained from traditional thermoplastic polymeric materials such as polyethylene, polypropylene, polyethylene terephthalate, polyvinyl chloride, polyvinyl butyral, polyurethane, polyester and their copolymers and mixtures. Thermoplastic polymeric materials of the above mentioned type, suitable for being used in the present invention, must be added to substances capable of lowering, if necessary, the melting temperature of the thermoplastic film, or at least of making the melting possible, below a temperature level above which the materials which form the components to be joined would begin to deteriorate.

In the case of leather, which is the material that is more commonly used in shoe production, the temperature level generally depends on the treatments that the leather undergo. In the case of more delicate leathers or synthetic materials the temperature level is approximately 60°C.

In order to reach the melting of the thermoplastic film placed between the two shoe components to be joined, an induction heating system is used with thermoplastic films that are suitable to be heated by means of high frequency energy, preferably between 400 and 1000 kHz, after introducing metallic material in the polymeric matrix, preferably in the form of powder, fibre or mesh; the heating is carried out, through joule effect, due to the eddy currents which are induced into the particles of metallic material. Metallic materials which may be profitably used for the aims of the present invention are ferrite powder and fibre, steel powder and fibre, nickel powder, stainless-steel mesh, brass mesh, aluminium mesh, copper, iron filings. Obviously, conductive metals with high losses at the frequencies used are to be considered as preferred. If metal mesh is used, it is preferable for it to be electrowelded or in the form of a perforated plate. In particular, iron filings may be constituted of waste metal material from marble, stone and granite sawing processes of the stone industry.

Amongst the various thermoplastic films that are used, those in polyurethane are to be considered particularly favourable with reference to the aims of the present invention.

In order to improve the compatibility between the thermoplastic film and the materials of the components to be glued, it may be convenient to treat the surfaces, destined to come into contact with the film, with a polyurethane or neoprene primer. A polyurethane or neoprene primer increases the cohesion between the thermoplastic film and the surfaces to be united, thus permitting a greater gluing efficiency due to the increase of the volume to be glued - thanks to a deeper penetration in a perpendicular direction to the contact surfaces.

According to a practical embodiment of the method of the invention and with reference to the joining of sole and upper which is typical of the production process of shoes, a suitably shaped film, in thermoplastic material and prepared for being heated, as stated above, is placed between the sole and the upper. The assembled workpiece is placed in a substantially conventional induction heater and a moderate pressure is applied on it. Owing to the electromagnetic field produced by the coil system of the induction heater, the thermoplastic film is heated and after a short while reaches its melting temperature, whereas the components to be joined are not overheated in anyway. When the electromagnetic field ceases, while the workpiece is still under pressure, a rapid cooling occurs which determines the definitive gluing of the upper to the sole.

In a practical, non limiting example, a thermoplastic film was used, in polyurethane and containing approximately 30% in weight of steel fibre, which was cut in order to give it a form suitable to be placed on the side of the sole to be joined to the upper. The film was brought to fusion in the induction heater in 5 seconds by maintaining on it a pressure of approximately 25 kg/cm² , a rapid cooling of the workpiece was then caused by interrupting the magnetic field. Tests carried out on the cooled semi-manufactured product showed a greater gluing uniformity compared to the traditional method and an excellent hold of the gluing itself.

The steel powder that was used has a granulometry between 0,1 and 0,8 mm (evaluated with the methods "STAV 2003" and "JEL 200"); the fibres of the steel fibre have an average length between 1,5 and 2 mm, with an average section between 0,4 and 0,8 microns.

In the case of the above-stated practical example, the polyurethane material that was used was DESMOCOLL® of the BAYER firm. Any other product with equivalent technological properties may be used as an alternative, as will be obvious to a technician of this field. Furthermore, in the quoted example an induction heater of the AETRON firm was used, but it is clear that any other type of equivalent heater may be used alternatively.

It is clear that, although up till now reference has been made to the joining of an upper and a sole, this method may be identically applied to the joining of other shoe components such as, for example, welts, patched pieces, counters, etc. Clearly, in each of these different applications, the thermoplastic film must be correspondingly shaped by punching.

The operative frequency of the induction heater in the quoted example was approximately 850 kHz, however, as will be clear to a technician of the field, it may be varied according to the granulometry and the density of metallic material incorporated in the polymeric matrix.

The adhesive thermoplastic film according to the invention, in its most general formulation, may contain from 15% to 45% in weight of metallic material, preferably in the form of fibres or powders, and may be advantageously added with resins suitable for increasing adhesiveness, such as, epoxy resins, terpenic resins, low-melting terpenphenolic resins; in this way the operations that precede the actual gluing and which regard the positioning of the parts to be glued are facilitated. These adhesive resins may be contained in a measure that varies between 10% and 40% in weight.

The adhesive thermoplastic film accordingly to the present invention will be available in sheets with a thickness that vary between 0,2 and 0,5 mm, suitable for being cut or punched, also in an automatized way, in order to make elements with a form suitable to be placed between the shoe components to be joined.

If considered appropriate, the thermoplastic film may be added with substances able to, or at least treated in order to, improve one or more of its properties: thermal isolation, waterproofing, transpiration, mechanical resistance, resistance to wear, resistance to low temperatures.

The economical advantages deriving from the application of the method according to the present invention are related firstly to the reduction of working time and to the obtainment of more efficient glueing, to the benefit of productivity and production quality. The estimated saving on the global production cost is approximately 10% and is determined by the following factors:
- Simplification of gluing operations;
- Greater gluing performance;
- Reduction of time needed for gluing;
- Elimination of cleaning phase following the use of conventional adhesives;
- Possibility of automation of gluing operations;
- Possibility of recycling waste of thermoplastic film.

Secondly, the application of the method according to the present invention permits to reach important advantages also from a point of view of safety in the working environment and of environmental pollution, owing to the fact that it does not involve the use of inflammable solvents nor the release of noxious solvents for the operators; this causes a minor production of waste material, because the cutting or punching waste of the thermoplastic film is recyclable, and also because containers for adhesives are not used, which have to be disposed of as toxic waste after being used.

Variations and/or modifications may be brought to the method for gluing of shoe components as described above, without departing from the scope of the invention itself as stated in the appended claims.

## Claims

1. A method for gluing shoe components in a shoe manufacturing process **characterized by** the fact that it comprises the following steps:
- placing a film of thermoplastic material between the components to be joined acting as an adhesive after being melted, said film comprising a metallic material;
- applying of a pressure on the workpiece formed by said components and said film;
- simultaneously submitting to induction heating the workpiece to melt the film without causing the degradation of the materials of which the components are made;
- quick cooling under pressure.

2. The method according to claim 1, in which the thermoplastic material is selected from polyethylene, polypropylene, polyethylene terephthalate, polyvinyl chloride, polyvinyl butyral, polyurethane, polyester and their copolymers and mixtures.

3. The method according to claim 2, in which the thermoplastic material is polyurethane.

4. The method according to claim 1, in which the metallic material is selected from ferrite, iron, steel, nickel, aluminium, copper, brass, in powder, fibre or mesh.

5. The method according to the preceding claims, in which the surface of the components is treated with polyurethane or neoprene primer before applying the thermoplastic film.

6. The method according to the preceding claims, in which the heating is obtained in an induction heater and the frequency necessary to obtain melting of the film is between 400 and 1000 kKz.

## Patentansprüche

1. Verfahren zum Verkleben von Schuhkomponenten in einem Schuhherstellungsprozeß, **gekennzeichnet durch** die Tatsache, dass es die folgenden Schritte enthält:
- Anordnen eines Films aus thermoplastischem Material, das als ein Adhäsiv wirkt, nachdem es geschmolzen wurde, zwischen den zu verbindenden Komponenten, welcher Film ein metallisches Material enthält;
- Aufbringen eines Druckes auf das Werkstück, das **durch** die Komponenten und den Film gebildet ist;
- gleichzeitiges Zuführen des Werkstücks zu einer Induktionsheizung, um den Film zu schmelzen, ohne die Verschlechterung der Materialien zu verursachen, aus welchen die Komponenten bestehen;
- schnelles Kühlen unter Druck.

2. Verfahren nach Anspruch 1, wobei das thermoplastische Material ausgewählt ist aus Polyethylen, Polypropylen, Polyethylenterephthalat, Polyvinylchlorid, Polyvinylbutyral, Polyurethan, Polyester und deren Kopolymere und Mischungen.

3. Verfahren nach Anspruch 2, wobei das thermoplastische Material Polyurethan ist.

4. Verfahren nach Anspruch 1, wobei das metallische Material ausgewählt ist aus Ferrit, Eisen, Stahl, Nickel, Aluminium, Kupfer, Messing, als Pulver, Faser oder Geflecht.

5. Verfahren nach einem der vorhergehenden Ansprüche, wobei die Oberfläche der Komponenten mit Polyurethan- oder Neoprenprimer behandelt wird, bevor der thermoplastische Film aufgebracht wird.

6. Verfahren nach einem der vorhergehenden Ansprüche, wobei das Heizen in einem Induktionsheizer erreicht wird und die Frequenz, die zum Erreichen des Schmelzens des Films erforderlich ist, zwischen 400 und 1000 kHz ist.

## Revendications

1. Procédé de collage d'éléments constitutifs d'une chaussure lors d'un processus de fabrication de chaussure, **caractérisé par le fait qu'**il consiste à:
- placer un film en un matériau thermoplastique entre les éléments à réunir agissant comme adhésif après avoir été fondu, ledit film comportant un matériau métallique,
- exercer une pression sur l'ensemble formé par lesdits éléments et ledit film,
- simultanément, soumettre ledit ensemble à un chauffage par induction pour faire fondre le film sans entraîner la dégradation des matériaux dans lesquels sont réalisés les éléments, et
- refroidir rapidement sous pression.

2. Procédé selon la revendication 1, dans lequel le matériau thermoplastique est choisi parmi les composés suivants : polyéthylène, polypropylène, téréphtalate de polyéthylène, chlorure de polyvinyle, polybutyral de vinyle, polyuréthane, polyester, et leurs copolymères et mélanges.

3. Procédé selon la revendication 2, dans lequel le matériau thermoplastique est du polyuréthane.

4. Procédé selon la revendication 1, dans lequel le matériau métallique est choisi parmi les composés suivants : ferrite, fer, acier, nickel, aluminium, cuivre, laiton, en poudre, fibre ou maille.

5. Procédé selon les revendications précédentes, dans lequel la surface des éléments est traitée avec du polyuréthane ou du néoprène avant l'application du film thermoplastique.

6. Procédé selon les revendications précédentes, dans lequel le chauffage est un chauffage par induction et la fréquence nécessaire pour obtenir la fusion du film est entre 400 et 1000 kHz.
